# EUROPÄISCHE PATENTANMELDUNG

(11) **EP 4 270 614 A1**
(43) Veröffentlichungstag der Anmeldung: **01.11.2023**
(21) Anmeldenummer: 22170793.8
(22) Anmeldetag: 29.04.2022
(51) Int. Cl.: H01M 50/169, H01M 50/171, H01M 6/10, H01M 6/16, H01M 50/317, H01M 50/342, H01M 10/05, H01M 50/533, H01M 50/536, H01M 50/538

(54) **ENERGIESPEICHERZELLE**

(71) Anmelder: VARTA Microbattery GmbH, 73479 Ellwangen Jagst (DE)
(72) Erfinder: Ensling, David, 73479 Ellwangen (DE); Kieninger, Dominik, 73492 Rainau (DE); Pytlik, Edward, 73479 Ellwangen (DE)
(74) Vertreter: Ostertag & Partner Patentanwälte mbB

(57) **Zusammenfassung**

Eine Energiespeicherzelle (100) umfasst einen Elektroden-Separator-Verbund (104) in Form eines zylindrischen Wickels mit zwei endständigen Stirnseiten (104a, 104b), wobei ein Längsrand (106a) eines Anodenstromkollektors (106) aus einer der endständigen Stirnseiten (104a, 104b) und ein Längsrand (109a) eines Kathodenstromkollektors (109) aus der anderen der endständigen Stirnseiten (104a, 104b) des Elektroden-Separator-Verbunds (104) austritt. Der Verbund (104) wird von einem Gehäuse umschlossen, das einen metallischen Gehäusebecher (101) mit einer Innenseite (101d) und einer Außenseite (101e) sowie ein Deckelbauteil (102) umfasst. Ein Blechbauteil (112), gegebenenfalls einschließlich eines an dem Blechteil fixierten separaten elektrischen Leiters (133), verbindet einen aus der ersten endständigen Stirnseite (104a) austretenden Längsrand (106a; 109a) eines der Stromkollektoren (106; 109) elektrisch mit dem Deckelbauteil (102). Die Zelle umfasst mindestens ein Isolierelement (150; 160; 170; 180) aus einem elektrisch isolierenden Material, das das Blechbauteil (112) und/oder den Längsrand (106a, 109a) des aus der ersten endständigen Stirnseite (104a) austretenden Stromkollektors (106; 109) und/oder den an dem Blechteil fixierten separaten elektrischen Leiter (133) vor einem unmittelbaren Kontakt mit der Innenseite (101d) des Gehäusebechers (101) schützt.

## Beschreibung

### ANWENDUNGSGEBIET UND STAND DER TECHNIK

Die nachstehend beschriebene Erfindung betrifft eine Energiespeicherzelle.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Elektroden-Separator-Verbund kombiniert, in dem die Elektroden über den Separator miteinander verbunden sind. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. In einem so gebildeten Wickel sind die Elektroden über den Separator miteinander verbunden, eine Verklebung oder eine ähnlich feste Verbindung der Elektroden mit dem Separator ist in den allermeisten Fällen aber nicht zweckmäßig. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Das Gehäuse zylindrischer Rundzellen umfasst in der Regel einen Gehäusebecher, der zur Aufnahme des gewickelten Elektroden-Separator-Verbunds dient, sowie ein Deckelbauteil, das die Öffnung des Gehäusebechers verschließt. Zwischen dem Deckelbauteil und dem Gehäusebecher ist eine Dichtung angeordnet, die zum einen der Abdichtung des Zellgehäuses dient, zum anderen aber auch die Funktion hat, das Deckelbauteil und den Gehäusebecher elektrisch voneinander zu isolieren. Die Dichtung wird zur Montage meist auf den Rand des Deckelbauteils aufgezogen. Zum Verschluss der Rundzellen ist in aller Regel der Öffnungsrand des Gehäusebechers radial nach innen über den von der Dichtung umschlossenen Rand des Deckelbauteils umgebogen (Bördelprozess), so dass das Deckelbauteil einschließlich der Dichtung in der Öffnung des Gehäusebechers formschlüssig fixiert ist.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene bandförmige Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weisen die Zellen Blechteile auf, die flach auf den Stirnseiten des Wickels aufsitzen und mit den Längsrändern der Stromkollektoren durch Verschweißung verbunden sind. Dadurch ist es möglich, die Stromkollektoren und damit auch die dazugehörige Elektroden über ihre gesamte Länge elektrisch zu kontaktieren. Zellen mit derart kontaktierten Wickeln weisen einen deutlich reduzierten Innenwiderstand auf. Das Auftreten großer Ströme kann in der Folge sehr viel besser abgefangen und auch Wärme kann besser aus dem Wickel abgeführt werden.

Im Falle des Kontaktplattendesigns /der stirnseitigen Wickelkontaktierung werden bevorzugt sehr massive metallische Kontaktierungselemente eingesetzt, um hohe Querschnitte für hohe elektrische und thermische Leitfähigkeiten zu liefern. Zellen mit solchen massiven internen Kontaktelementen sind jedoch anfällig für Kurzschlüsse, die insbesondere aus einer Deformation des Gehäuses in Folge einer von außen wirkenden mechanischen Kraft resultieren können. Bei Zellen, die beispielsweise im Automotive-Bereich eingesetzt werden, ist eine Gefahr einer solchen Schädigung sehr real. Darüber hinaus kann bei der Produktion der Zellen aber auch eine Höhenkalibrierung erforderlich sein, bei der die Zellen gezielt gestaucht werden. Auch die hierbei angewandten axialen Kräfte können innerhalb der Zellen Kurzschlüsse verursachen.

### AUFGABE UND LÖSUNG

Der vorliegenden Erfindung lag die Aufgabe zugrunde, Energiespeicherzellen bereitzustellen, die sich durch eine hohe Energiedichte auszeichnen. Weiterhin sollen sich die Energiespeicherzellen insbesondere auch durch eine verbesserte Sicherheit auszeichnen.

Diese Aufgabe wird durch die Energiespeicherzelle mit den Merkmalen des Anspruchs 1 gelöst. Bevorzugte Ausführungsformen der Erfindung finden sich in den abhängigen Ansprüchen 2 bis 13.

Die erfindungsgemäße Energiespeicherzelle weist stets die unmittelbar folgenden Merkmale a. bis n. auf:
a. Die Zelle umfasst einen Elektroden-Separator-Verbund mit der Sequenz Anode / Separator / Kathode.
b. Die Anode des Elektroden-Separator-Verbunds ist bandförmig ausgebildet und umfasst einen bandförmigen Anodenstromkollektor, der einen ersten Längsrand und einen dazu parallelen zweiten Längsrand aufweist.
c. Der bandförmige Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds ist bandförmig ausgebildet und umfasst einen bandförmigen Kathodenstromkollektor, der einen ersten Längsrand und einen dazu parallelen zweiten Längsrand aufweist.
e. Der bandförmige Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
f. Der Elektroden-Separator-Verbund liegt in Form eines zylindrischen Wickels mit einer ersten endständigen, von einer umlaufenden Kante begrenzten Stirnseite und einer zweiten endständigen, von einer umlaufenden Kante begrenzten Stirnseite und einem dazwischen liegenden Wickelmantel vor und umfasst die Anode und die Kathode in spiralförmig aufgewickelter Form.
g. Die Anode und die Kathode sind innerhalb des Elektroden-Separator-Verbunds derart angeordnet, dass der erste Längsrand des Anodenstromkollektors aus einer der endständigen Stirnseiten und der erste Längsrand des Kathodenstromkollektors aus der anderen endständigen Stirnseite des Elektroden-Separator-Verbunds austritt.
h. Die Zelle umfasst ein luft- und flüssigkeitsdicht verschlossenes Gehäuse, das einen metallischen Gehäusebecher mit einem Boden und einer endständigen kreisförmigen Öffnung sowie ein Deckelbauteil mit einem kreisförmigen Rand, welche die endständige kreisförmige Öffnung verschließt, aufweist.
i. In dem Gehäusebecher ist der Elektroden-Separator-Verbund in axialer Ausrichtung angeordnet, wobei die erste Stirnseite in Richtung des Deckelbauteils und die zweite Stirnseite in Richtung des Bodens weist, gegebenenfalls unmittelbar mit dem Boden in Kontakt steht.
j. Die Zelle umfasst eine ringförmige Dichtung aus einem elektrisch isolierenden Material, die den kreisförmigen Rand des Deckelbauteils umschließt und den Gehäusebecher und das Deckelbauteil elektrisch voneinander isoliert.
k. Der Gehäusebecher umfasst eine Innenseite und eine Außenseite und in axialer Abfolge den Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Deckelbauteil und der Innenseite des Gehäusebechers steht.
l. Der Zentralabschnitt und der Verschlussabschnitt sind durch eine Einbuchtung, welche die Außenseite des Gehäusebechers ringförmig umläuft, getrennt.
m. Die Zelle umfasst ein Blechbauteil, gegebenenfalls einschließlich eines an dem Blechteil fixierten separaten elektrischen Leiters, das mit dem ersten Längsrand des aus der ersten endständigen Stirnseite austretenden Stromkollektors durch Verschweißung verbunden ist und über das dieser Stromkollektor elektrisch mit dem Deckelbauteil verbunden ist.

Besonders zeichnet sich die Zelle durch das folgende Merkmal aus:
n. Die Zelle umfasst mindestens ein Isolierelement aus einem elektrisch isolierenden Material, das das Blechbauteil und/oder den ersten Längsrand des aus der ersten endständigen Stirnseite austretenden Stromkollektors und/oder den an dem Blechteil fixierten separaten elektrischen Leiter vor einem unmittelbaren Kontakt mit der Innenseite des Gehäusebechers schützt, insbesondere im Bereich der Einbuchtung.

Durch diese Maßnahme wird gewährleistet, dass das Risiko eines Kurzschlusses im zellinternen Kontaktbereich reduziert wird. Beispielsweise im Zusammenhang mit einer Höhenkalibrierung auftretende axiale Kräfte führen in der Regel nicht mehr zu unmittelbaren Kontakten entgegengesetzt gepolter Zellkomponenten. Diese werden durch das mindestens eine Isolierelement unterbunden.

Der Boden des Gehäusebechers ist bevorzugt kreisförmig ausgebildet. Der Gehäusebecher wird meist durch Tiefziehen gebildet. Es ist aber beispielsweise auch möglich, den Becher durch Einschweißen eines Bodens in ein rohrförmiges Halbteil zu bilden.

Bevorzugt weist der Gehäusebecher eine Wandstärke im Bereich von 0,1 mm bis 2 mm auf.

Der Gehäusebecher besteht bevorzugt aus Aluminium, einer Aluminiumlegierung oder einem Stahlblech, beispielsweise einem vernickelten Stahlblech. Bevorzugt kann auch Edelstahl eingensetzt werden.

Geeignete Aluminiumlegierungen für den Gehäusebecher sind beispielsweise AI-Legierungen vom Typ 1235, 1050, 1060, 1070, 3003, 5052, Mg3, Mg212 (Serie 3000) und GM55. Weiterhin geeignet sind AISi, AICuTi, AlMgSi, AISiMg, AlSiCu, AICuTiMg und AlMg. Der Aluminiumanteil besagter Legierungen liegt bevorzugt oberhalb von 99,5 %.

Bei der erfindungsgemäßen Energiespeicherzelle handelt es sich bevorzugt um eine zylindrische Rundzelle. Bevorzugt liegt die Höhe einer als zylindrische Rundzelle ausgebildeten der erfindungsgemäßen Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

Der Elektroden-Separator-Verbund ist bevorzugt unter Verwendung zweier bandförmiger Separatoren gefertigt. Bevorzugt weist der Verbund die Sequenz Separator / Anode / Separator / Kathode oder Anode / Separator / Kathode / Separator auf. Der oder die Separatoren umschließen dann also entweder die Anode oder die Kathode. Ihnen kommt die Aufgabe zu, einen unmittelbaren elektrischen Kontakt zwischen entgegengesetzt gepolten Elektroden innerhalb des Wickels zu vermeiden und gleichzeitig einen Austausch von Ionen zwischen den Elektroden zuzulassen.

In einer besonders bevorzugten Ausführungsform der Erfindung ist die erfindungsgemäße Energiespeicherzelle eine Lithium-Ionen-Zelle.

Für die Elektroden der Energiespeicherzelle können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Besonders geeignet sind beispielsweise auch Silizium-Kohlenstoff-Komposite (SiC). Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, StyrolButadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität einer als zylindrische Rundzelle ausgebildeten erfindungsgemäßen Energiespeicherzelle auf Lithium-Ionen-Basis beträgt bevorzugt bis zu 15000 mAh. Mit dem Formfaktor von 21 x 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

In einer ersten besonders bevorzugten Ausführungsform zeichnet sich die erfindungsgemäße Energiespeicherzelle durch mindestens eines der unmittelbar folgenden Merkmale a. bis c. aus:
a. Das mindestens eine Isolierelement ist oder umfasst ein Isolierband, das auf die Kante, welche die Stirnseite begrenzt, aufgebracht ist und diese vor einem unmittelbaren Kontakt mit der Innenseite schützt.
b. Das mindestens eine Isolierelement ist oder umfasst ringförmiges Formteil aus Kunststoff mit bevorzugt L-förmigem Querschnitt, das auf die Kante, welche die Stirnseite begrenzt, aufgebracht ist und diese vor einem unmittelbaren Kontakt mit der Innenseite schützt.
c. Das Isolierband oder das ringförmige Formteil aus Kunststoff weist eine Dicke im Bereich von 10 µm bis 200 µm auf.

Es ist bevorzugt, dass die unmittelbar vorstehenden Merkmale a. und c. sowie b. und c. in Kombination realisiert sind.

Bei dem Isolierband kann es sich beispielsweise um ein Kapton/Polyimid-Klebeband handeln.

Das ringförmige Formteil aus Kunststoff mit bevorzugt L-förmigem Querschnitt kann beispielsweise durch Spritzguss gefertigt sein und auf die zu schützende Kante aufgeschoben werden. Es kann beispielsweise aus Teflon oder aus Polyamid bestehen.

In einer zweiten besonders bevorzugten Ausführungsform zeichnet sich die erfindungsgemäße Energiespeicherzelle durch mindestens eines der unmittelbar folgenden Merkmale a. bis c. aus:
a. Das mindestens eine Isolierelement ist oder umfasst ein ringförmiges Isolierelement aus Kunststoff, das an der Innenseite des Gehäusebechers im Bereich der Einbuchtung anliegt und diese vor einem unmittelbaren Kontakt mit dem Blechbauteil schützt.
b. Das ringförmige Isolierelement ist ein Teilabschnitt der ringförmigen Dichtung.
c. Das ringförmige Isolierelement aus Kunststoff weist eine Dicke im Bereich von 20 µm bis 400 µm auf.

Es ist bevorzugt, dass die unmittelbar vorstehenden Merkmale a. und b. in Kombination realisiert sind. Besonders bevorzugt sind die Merkmale a. bis c. in Kombination realisiert.

Auch das ringförmige Isolierelement kann ein Spritzgussteil sein, wie im Übrigen auch die ringförmige Dichtung. Die Dicke des Isolierelements liegt bevorzugt in einem Bereich von 20 µm bis 400 µm.

Das ringförmige Isolierelement kann beispielsweise aus Teflon, aus Polyamid, aus Polybutylenterephtalat oder aus einem Perfluoralkoxy-Polymer bestehen.

In einer dritten besonders bevorzugten Ausführungsform zeichnet sich die erfindungsgemäße Energiespeicherzelle durch mindestens eines der unmittelbar folgenden Merkmale a. bis d. aus:
a. Das mindestens eine Isolierelement ist oder umfasst ein ringförmiges Kunststoffteil, das das Blechbauteil umschließt und dieses vor einem unmittelbaren Kontakt mit der Innenseite des Gehäusebechers im Bereich der Einbuchtung schützt.
b. Das ringförmige Kunststoffteil ist hohlzylindrisch ausgebildet, umfasst einen Mantel und wird stirnseitig durch je einen umlaufenden Rand begrenzt.
c. Das ringförmige Kunststoffteil ist hohlzylindrisch ausgebildet, umfasst einen Mantel und wird stirnseitig durch je einen umlaufenden Rand begrenzt, wobei einer der Ränder auf als nach außen gerichteter ringförmiger Kragen ausgebildet ist und auf dem Blechbauteil aufsitzt.
d. Das ringförmige Kunststoffteil weist eine Dicke im Bereich von 20 µm bis 600 µm auf.

Es ist bevorzugt, dass die unmittelbar vorstehenden Merkmale a. und b., besonders bevorzugt die Merkmale a. und b. und d., in Kombination realisiert sind. Besonders bevorzugt sind die unmittelbar vorstehenden Merkmale a. und c. und d. in Kombination realisiert.

Auch das ringförmige Kunststoffteil kann ein Spritzgussteil sein. Die Dicke des Kunststoffteils liegt bevorzugt in einem Bereich von 20 µm bis 600 µm.

Das Kunststoffteil kann beispielsweise aus kann beispielsweise aus Teflon, aus Polyamid, aus Polybutylenterephtalat oder aus einem Perfluoralkoxy-Polymer gefertigt sein.

In einer vierten besonders bevorzugten Ausführungsform zeichnet sich die erfindungsgemäße Energiespeicherzelle durch mindestens eines der unmittelbar folgenden Merkmale a. bis d. aus:
a. Das mindestens eine Isolierelement ist oder umfasst eine elektrisch isolierende Kunststoffbeschichtung, die einen Rand des Blechbauteils umschließt und diesen vor einem unmittelbaren Kontakt mit der Innenseite des Gehäusebechers, insbesondere im Bereich der Einbuchtung, schützt.
b. Die elektrisch isolierende Beschichtung ist durch Umspritzen des Randes des Blechbauteils gebildet.

Es ist bevorzugt, dass die unmittelbar vorstehenden Merkmale a. und b. in Kombination realisiert sind.

Zum Umspritzen des Randes des Blechbauteils eignen sich im Grunde alle thermoplastischen Kunststoffe mit elektrisch isolierenden Eigenschaften. Geeignet ist beispielsweise Polyamid.

Erfindungsgemäß sind auch Kombinationen der beschriebenen vier besonders bevorzugten Ausführungsformen. So zeichnet sich die Zelle besonders bevorzugt durch eine Kombination von zwei oder mehr der vier unmittelbar folgenden Merkmale a. bis d. aus:
a. Das mindestens eine Isolierelement umfasst ein Isolierband oder ringförmiges Formteil aus Kunststoff, das auf die Kante, welche die Stirnseite begrenzt, aufgebracht ist und diese vor einem unmittelbaren Kontakt mit der Innenseite schützt, also ein Isolierband oder ein ringförmiges Formteil gemäß der ersten besonders bevorzugten Ausführungsform, und/oder
b. das mindestens eine Isolierelement umfasst ein ringförmiges Isolierelement, das an der Innenseite des Gehäusebechers im Bereich der Einbuchtung anliegt und diese vor einem unmittelbaren Kontakt mit dem Blechbauteil schützt, also ein ringförmiges Isolierelement gemäß der zweiten besonders bevorzugten Ausführungsform, und/oder
c. das mindestens eine Isolierelement umfasst ein ringförmiges Kunststoffteil, das das Blechbauteil umschließt und dieses vor einem unmittelbaren Kontakt mit der Innenseite des Gehäusebechers im Bereich der Einbuchtung schützt, also ein ringförmiges Kunststoffteil gemäß der dritten besonders bevorzugten Ausführungsform, und/oder
d. das mindestens eine Isolierelement ist oder umfasst eine elektrisch isolierende Kunststoffbeschichtung, die einen Rand des Blechbauteils umschließt und diesen vor einem unmittelbaren Kontakt mit der Innenseite des Gehäusebechers, insbesondere im Bereich der Einbuchtung, schützt, also eine Kunststoffbeschichtung gemäß der vierten besonders bevorzugten Ausführungsform.

Es ist bevorzugt, dass sich die erfindungsgemäße Zelle durch mindestens eines der folgenden Merkmale a. bis c. auszeichnet:
a. Der Gehäusebecher weist in dem Zentralabschnitt und dem Verschlussabschnitt einen identischen maximalen Außendurchmesser auf.
b. Im Bereich der Einbuchtung ist der Außendurchmesser des Gehäusebechers um das 4-bis 20-fache der Wandstärke des Gehäusebechers in diesem Bereich reduziert.

Es ist bevorzugt, dass die unmittelbar vorstehenden Merkmale a. und b. in Kombination realisiert sind.

Es gibt zwei bevorzugte Varianten, um das Blechbauteil, das mit dem ersten Längsrand des aus der ersten endständigen Stirnseite austretenden Stromkollektors durch Verschweißung verbunden ist, elektrisch mit dem Deckelbauteil zu verbinden.

Gemäß einer Variante A zeichnet sich die erfindungsgemäße Zelle durch mindestens eines der unmittelbar folgenden Merkmale a. bis c. aus:
a. Das Blechbauteil ist unmittelbar mit dem Deckelbauteil verbunden.
b. Das Blechbauteil umfasst einen ersten Abschnitt, der flach auf dem ersten Längsrand des aus der ersten endständigen Stirnseite austretenden Stromkollektors aufsitzt und sich parallel zur Stirnseite erstreckt.
c. Das Blechbauteil umfasst einen zweiten Abschnitt, der sich abgewinkelt an den ersten Abschnitt anschließt und über den der erste Abschnitt elektrisch mit dem Deckelbauteil verbunden ist.

Es ist bevorzugt, dass die unmittelbar vorstehenden Merkmale a. und b. in Kombination realisiert sind. Besonders bevorzugt sind die unmittelbar vorstehenden Merkmale a. bis c. in Kombination realisiert.

Gemäß einer Variante B zeichnet sich die erfindungsgemäße Zelle durch mindestens eines der unmittelbar folgenden Merkmale a. und b. aus:
a. Das Blechbauteil ist über den separaten elektrischen Leiter mit dem Deckelbauteil verbunden.
b. Das Blechbauteil sitzt flach auf dem ersten Längsrand des aus der ersten endständigen Stirnseite austretenden Stromkollektors auf.

Es ist bevorzugt, dass die unmittelbar vorstehenden Merkmale a. und b. in Kombination realisiert sind.

Wenn der separate elektrische Leiter zum Einsatz kommt, besteht er bevorzugt aus dem gleichen Material wie das Blechbauteil selbst.

Natürlich ist nicht nur der erste Längsrand des aus der ersten endständigen Stirnseite austretenden Stromkollektors elektrisch zu kontaktieren. Vielmehr muss auch der erste Längsrand des aus der zweiten endständigen Stirnseite austretenden Stromkollektors elektrisch kontaktiert werden. Erfindungsgemäß bevorzugt sind die folgenden zwei Varianten:
Gemäß einer Variante C zeichnet sich die erfindungsgemäße Zelle durch das unmittelbar folgende Merkmal a. aus:
a. Der erste Längsrand des aus der zweiten endständigen Stirnseite austretenden Stromkollektors sitzt unmittelbar auf dem Boden des Gehäusebechers auf und ist mit diesem durch Verschweißung verbunden.

Gemäß einer Variante D zeichnet sich die erfindungsgemäße Zelle durch das unmittelbar folgende Merkmal b. aus:
b. Die Zelle umfasst ein Blechbauteil, das mit dem ersten Längsrand des aus der zweiten endständigen Stirnseite austretenden Stromkollektors durch Verschweißung verbunden ist und über das dieser Stromkollektor elektrisch mit dem Boden des Gehäusebechers verbunden ist.

In beiden Fällen kann der Längsrand des aus der zweiten endständigen Stirnseite austretenden Stromkollektors im Idealfall über seine gesamte Länge elektrisch und/oder thermisch angebunden werden, wie im Fall des aus der ersten endständigen Stirnseite austretenden Stromkollektors.

Besonders bevorzugt zeichnet sich die erfindungsgemäße Zelle durch das folgende Merkmal a. aus:
a. Der aus der ersten endständigen Stirnseite austretende Stromkollektor ist der Anodenstromkollektor und der aus der zweiten Stirnseite austretende Stromkollektor ist der Kathodenstromkollektor.

Diese Konfiguration ist insbesondere dann von Vorteil, wenn das Gehäuse, wie oben beschrieben, aus Aluminium oder einer aluminiumhaltigen Legierung besteht. Da auch der Kathodenstromkollektor bevorzugt aus Aluminium besteht, siehe unten.

In einer besonders bevorzugten Weiterbildung der Erfindung zeichnet sich das mit dem Anodenstromkollektor elektrisch verbundene Blechbauteil durch mindestens eines der unmittelbar folgenden Merkmale a. oder b. aus:
a. Das Blechbauteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Blechbauteil besteht aus dem gleichen Material wie der Anodenstromkollektor.

Es ist bevorzugt, dass die unmittelbar vorstehenden Merkmale a. und b. in Kombination realisiert sind.

In Ausführungsformen, in denen auch der Kathodenstromkollektor über ein Blechbauteil elektrisch angebunden wird, zeichnet sich dieses Blechbauteil durch mindestens eines der unmittelbar folgenden Merkmale a. und b. aus:
a. Das Blechbauteil besteht aus Aluminium oder einer Aluminiumlegierung.
b. Das Blechbauteil besteht aus dem gleichen Material wie der Kathodenstromkollektor.

Es ist bevorzugt, dass die unmittelbar vorstehenden Merkmale a. und b. in Kombination realisiert sind.

Besonders bevorzugt zeichnen sich erfindungsgemäß zur Kontaktierung der Längsränder der Stromkollektoren verwendbare Blechbauteile durch mindestens eines der unmittelbar folgenden Merkmale a. bis g. aus:
a. Sie weisen eine bevorzugt gleichmäßige Dicke im Bereich von 50 µm bis 600 µm, bevorzugt im Bereich von 150 µm bis 350 µm, auf.
b. Sie weisen zwei sich gegenüberliegenden Flachseiten auf und erstreckt sich im Wesentlichen nur in einer Dimension.
c. Sie sind als Scheibe oder als polygonale Platte ausgebildet oder umfassen eine solche Scheibe oder Platte.
d. Sie sind derart dimensioniert, dass sie mindestens 50 %, bevorzugt mindestens 60 %, besonders bevorzugt mindestens 70 % der ersten endständigen und/oder der zweiten endständigen Stirnseite abdecken.
e. Sie weisen mindestens eine Durchbrechung, insbesondere mindestens ein Loch und oder mindestens einen Schlitz, auf.
f. Sie weisen mindestens eine Sicke auf, die auf einer Flachseite des Blechbauteils als längliche Vertiefung und auf der gegenüberliegenden Flachseite als längliche Erhöhung zu Tage tritt, wobei sie mit der Flachseite, welche die längliche Erhöhung trägt, auf dem ersten Längsrand des jeweiligen Stromkollektors aufsitzen.
g. Sie sind im Bereich der Sicke mit dem ersten Längsrand des jeweiligen Stromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management der erfindungsgemäßen Energiespeicherzelle von Bedeutung. Je größer die Abdeckung ist, desto eher ist es möglich, den ersten Längsrand des jeweiligen Stromkollektors möglichst über seine gesamte Länge zu kontaktieren. In Elektroden-Separator-Verbund gebildete Wärme kann so gut über das oder die Blechbauteile abgeführt werden.

Es hat sich in einigen Ausführungsformen als vorteilhaft erwiesen, den Längsrand eines Stromkollektors einer Vorbehandlung zu unterziehen, bevor ein Blechbauteil aufgesetzt wird. Insbesondere kann in den Längsrand mindestens eine Vertiefung eingefalzt werden, die zu der mindestens einen Sicke bzw. der länglichen Erhöhung auf der entsprechenden Flachseite des Blechbauteils korrespondiert.

Die Längsränder der Stromkollektoren können auch durch eine Vorbehandlung einer gerichteten Umformung unterzogen worden sein. Beispielsweise können sie in eine definierte Richtung umgebogen sein.

Die mindestens eine Durchbrechung in den Blechbauteilen kann beispielsweise zweckmäßig sein, um den Elektroden-Separator-Verbund mit einem Elektrolyten tränken zu können.

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

Es ist bevorzugt, dass zur Herstellung des Elektroden-Separator-Verbunds die bandförmigen Elektroden gemeinsam mit dem oder den bandförmigen Separatoren einer Wickelvorrichtung zugeführt und in dieser bevorzugt um eine Wickelachse herum spiralförmig aufgewickelt werden. In einigen Ausführungsformen werden die Elektroden und der oder die Separatoren hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AICuTi, AIMgSi, AISiMg, AISiCu, AICuTiMg und AIMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm. In diesem Fall bezeichnet man die Stromkollektoren auch als Stromkollektorfolien

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

In manchen Ausführungsformen ist es - vor allem aus Gründen der thermischen Anbindung - bevorzugt, dass die äußere Wickellage aus unbeschichteten Metallfolien besteht, die in unmittelbarem Kontakt zum Gehäuse stehen. Beispielsweise kann im Falle eines Aluminiumgehäuses ein endständiger, nicht mit Elektrodenmaterial beschichteter Abschnitt einer aus Aluminium bestehenden Stromkollektorfolie der Kathode die äußere Windung des Wickels bilden und gleichzeitig unmittelbar an dem Aluminiumgehäuse anliegen. Im Falle eines Gehäuses aus vernickeltem Stahl kann beispielsweise ein endständiger, nicht mit Elektrodenmaterial beschichteter Abschnitt einer aus Kupfer oder Nickel bestehenden Stromkollektorfolie der Anode die äußere Windung des Wickels bilden und am Gehäuse anliegen.

In diesen Fällen wird der Wickelmantel durch den endständigen Abschnitt der jeweiligen Stromkollektorfolie gebildet.

Es ist bevorzugt, dass die Längsränder des oder der Separatoren die Stirnseiten des als Wickel ausgebildeten Elektroden-Separator-Verbunds bilden.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 eine erste Ausführungsform einer erfindungsgemäßen Energiespeicherzelle (Querschnittsdarstellung),
- Fig. 2 eine zweite Ausführungsform einer erfindungsgemäßen Energiespeicherzelle,
- Fig. 3 eine dritte Ausführungsform einer erfindungsgemäßen Energiespeicherzelle (Querschnittsdarstellung),
- Fig. 4 mehrere Ausführungsformen eines Blechbauteils, das sich zur Kontaktierung des ersten Längsrands des aus der ersten endständigen Stirnseite austretenden Stromkollektors einer erfindungsgemäßen Energiespeicherzelle eignet (perspektivische Darstellung),
- Fig. 5 einen Elektroden-Separator-Verbund, der Bestandteil eines erfindungsgemäßen Energiespeicherzelle ist, sowie dessen Komponenten (Draufsicht bzw. perspektivische Darstellung), und
- Fig. 6 weitere Ausführungsformen des Blechbauteils, das sich zur Kontaktierung des ersten Längsrands des aus der ersten endständigen Stirnseite austretenden Stromkollektors einer erfindungsgemäßen Energiespeicherzelle eignet (perspektivische Darstellung).

### DETAILLIERTE BESCHREIBUNG DER AUSFÜHRUNGSBEISPIELE

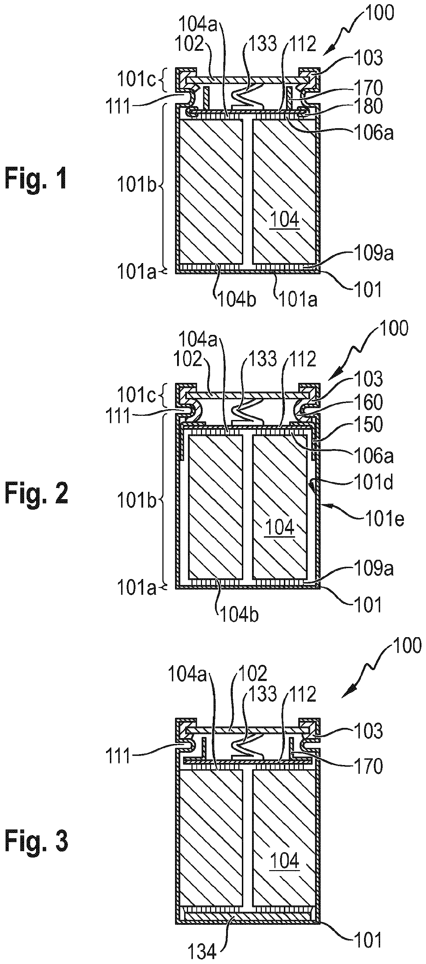

**Fig. 1** zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und ein Deckelbauteil 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a des Deckelbauteils 102 umschließt und den Gehäusebecher 101 und das Deckelbauteil 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite 101d des Gehäusebechers 101 in Kontakt steht, und in dem Verschlussabschnitt 101c die ringförmige Dichtung 103 in einem Presskontakt mit dem Deckelbauteil 102 und der Innenseite des Gehäusebechers 101 steht. Der Zentralabschnitt 101b und der Verschlussabschnitt 101c sind durch eine Einbuchtung 111, welche die Außenseite 101e des Gehäusebechers 101 ringförmig umläuft, getrennt.

Die Zelle 100 umfasst auch einen Elektroden-Separator-Verbund 104 in Form eines zylindrischen Wickels mit der Sequenz Anode / Separator/ Kathode, der allerdings hier nicht detailliert dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Kathodenstromkollektors 109, der aus der Stirnseite 104b des Elektroden-Separator-Verbunds 104 austritt. Der Längsrand 109a ist, bevorzugt über seine gesamte Länge, unmittelbar mit dem Gehäuseboden 101a verschweißt. Der Längsrand 106a ist, bevorzugt über seine gesamte Länge, unmittelbar mit dem Blechbauteil 112 verschweißt. Das Blechbauteil 112 ist wiederum über den elektrischen Leiter 133 mit dem Deckelbauteil 102 verbunden.

Die Zelle 100 weist bevorzugt eine Höhe im Bereich von 60 mm bis 100 mm auf, ihr Durchmesser liegt bevorzugt im Bereich von 20 mm bis 50 mm. Der Gehäusebecher 101 weist in dem Zentralabschnitt 101b typischerweise eine Wandstärke im Bereich von 0,1 mm bis 0,3 mm auf.

Die Zelle umfasst als Isolierelement eine elektrisch isolierende Kunststoffbeschichtung 180, die einen Rand des Blechbauteils 112 umschließt und diesen vor einem unmittelbaren Kontakt mit der Innenseite 101d des Gehäusebechers 101, insbesondere im Bereich der Einbuchtung 111, schützt. Die elektrisch isolierende Beschichtung 180 ist durch Umspritzen des Randes des Blechbauteils 112 gebildet. Weiterhin umfasst die Zelle 100 als Isolierelement ein ringförmiges Kunststoffteil 170, das den an dem Blechteil fixierten separaten elektrischen Leiters 133, umschließt und diesen vor einem unmittelbaren Kontakt mit der Innenseite 101d des Gehäusebechers 101 im Bereich der Einbuchtung 111 schützt.

In der Folge ist die Zelle 100 auch im Fall einer Deformation des Gehäuses in Folge einer von außen wirkenden mechanischen Kraft hervorragend vor Kurzschlüssen geschützt.

**Fig. 2** zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und ein Deckelbauteil 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a des Deckelbauteils 102 umschließt und den Gehäusebecher 101 und das Deckelbauteil 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite 101d des Gehäusebechers 101 in Kontakt steht (Achtung: Ausschließlich aus Gründen der Übersichtlichkeit ist der Elektroden-Separator-Verbund 104 vorliegend beabstandet von der Innenseite 101d gezeichnet, tatsächlich aber presst er gegen sie, wie es beispielsweise in Fig. 1 dargestellt ist), und in dem Verschlussabschnitt 101c die ringförmige Dichtung 103 in einem Presskontakt mit dem Deckelbauteil 102 und der Innenseite des Gehäusebechers 101 steht. Der Zentralabschnitt 101b und der Verschlussabschnitt 101csind durch eine Einbuchtung 111, welche die Außenseite 101e des Gehäusebechers 101 ringförmig umläuft, getrennt.

Die Zelle 100 umfasst auch einen Elektroden-Separator-Verbund 104 in Form eines zylindrischen Wickels mit der Sequenz Anode / Separator/ Kathode, der allerdings hier nicht detailliert dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Kathodenstromkollektors 109, der aus der Stirnseite 104b des Elektroden-Separator-Verbunds 104 austritt. Der Längsrand 109a ist, bevorzugt über seine gesamte Länge, unmittelbar mit dem Gehäuseboden 101a verschweißt. Der Längsrand 106a ist, bevorzugt über seine gesamte Länge, unmittelbar mit dem Blechbauteil 112 verschweißt. Das Blechbauteil 112 ist wiederum über den elektrischen Leiter 133 mit dem Deckelbauteil 102 verbunden.

Die Zelle 100 weist bevorzugt eine Höhe im Bereich von 60 mm bis 100 mm auf, ihr Durchmesser liegt bevorzugt im Bereich von 20 mm bis 50 mm. Der Gehäusebecher 101 weist in dem Zentralabschnitt 101b typischerweise eine Wandstärke im Bereich von 0,1 mm bis 0,3 mm auf.

Die Zelle umfasst als Isolierelement ein ringförmiges Formteil aus Kunststoff 150 mit L-förmigem Querschnitt, das auf die Kante, welche die Stirnseite 104a begrenzt, aufgebracht ist und diese vor einem unmittelbaren Kontakt mit der Innenseite 101d des Gehäusebechers 101 schützt. Weiterhin umfasst die Zelle ein ringförmiges Isolierelement 160 aus Kunststoff, das an der Innenseite 101d des Gehäusebechers 101 im Bereich der Einbuchtung 111 anliegt und diese vor einem unmittelbaren Kontakt mit dem elektrischen Leiter 133 schützt. Hierbei kann es sich auch um einen Teilabschnitt der ringförmigen Dichtung 103 handeln, die ausreichend hoch ausgebildet sein kann, um auch die Einbuchtung 111 von innen abzudecken.

In der Folge ist die Zelle 100 auch im Fall einer Deformation des Gehäuses in Folge einer von außen wirkenden mechanischen Kraft hervorragend vor Kurzschlüssen geschützt.

An Stelle des ringförmigen Formteils aus Kunststoff 150 mit L-förmigem Querschnitt kann die Kante, welche die Stirnseite 104a begrenzt, auch mit einem Isolierband, beispielsweise einem Kaptonband 150, abgedeckt werden. Dieses kann im Idealfall bereits bei der Bildung des Wickels auf die Kante aufgebracht werden und schützt die Kante ebenso effizient vor einem unmittelbaren Kontakt mit der Innenseite 101d.

**Fig.** 3 zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und ein Deckelbauteil 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a des Deckelbauteils 102 umschließt und den Gehäusebecher 101 und das Deckelbauteil 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite 101d des Gehäusebechers 101 in Kontakt steht und in dem Verschlussabschnitt 101c die ringförmige Dichtung 103 in einem Presskontakt mit dem Deckelbauteil 102 und der Innenseite des Gehäusebechers 101 steht. Der Zentralabschnitt 101b und der Verschlussabschnitt 101c sind durch eine Einbuchtung 111, welche die Außenseite 101e des Gehäusebechers 101 ringförmig umläuft, getrennt.

Die Zelle 100 umfasst auch einen Elektroden-Separator-Verbund 104 in Form eines zylindrischen Wickels mit der Sequenz Anode / Separator/ Kathode, der allerdings hier nicht detailliert dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Kathodenstromkollektors 109, der aus der Stirnseite 104b des Elektroden-Separator-Verbunds 104 austritt. Der Längsrand 109a ist, bevorzugt über seine gesamte Länge, unmittelbar mit dem Blechbauteil 134 verschweißt. Das Blechbauteil 134 ist wiederum mit dem Boden 101a durch Verschweißung verbunden. Der Längsrand 106a ist, bevorzugt über seine gesamte Länge, unmittelbar mit dem Blechbauteil 112 verschweißt. Das Blechbauteil 112 ist wiederum über den elektrischen Leiter 133 mit dem Deckelbauteil 102 verbunden.

Die Zelle 100 weist bevorzugt eine Höhe im Bereich von 60 mm bis 100 mm auf, ihr Durchmesser liegt bevorzugt im Bereich von 20 mm bis 50 mm. Der Gehäusebecher 101 weist in dem Zentralabschnitt 101b typischerweise eine Wandstärke im Bereich von 0,1 mm bis 0,3 mm auf.

Die Zelle umfasst als Isolierelement ein ringförmiges Kunststoffteil 170, das den elektrischen Leiter 133 seitlich umschließt und diesen vor einem unmittelbaren Kontakt mit der Innenseite 101d des Gehäusebechers 101 im Bereich der Einbuchtung 111 schützt. Das ringförmige Kunststoffteil 170 ist hohlzylindrisch ausgebildet, umfasst einen senkrecht zum Blechbauteil 112 stehenden Mantel 171. Einer seiner Ränder ist als nach außen gerichteter ringförmiger Kragen 171 ausgebildet und sitzt auf dem Blechbauteil 112 auf.

In der Folge ist die Zelle 100 auch im Fall einer Deformation des Gehäuses in Folge einer von außen wirkenden mechanischen Kraft hervorragend vor Kurzschlüssen geschützt.

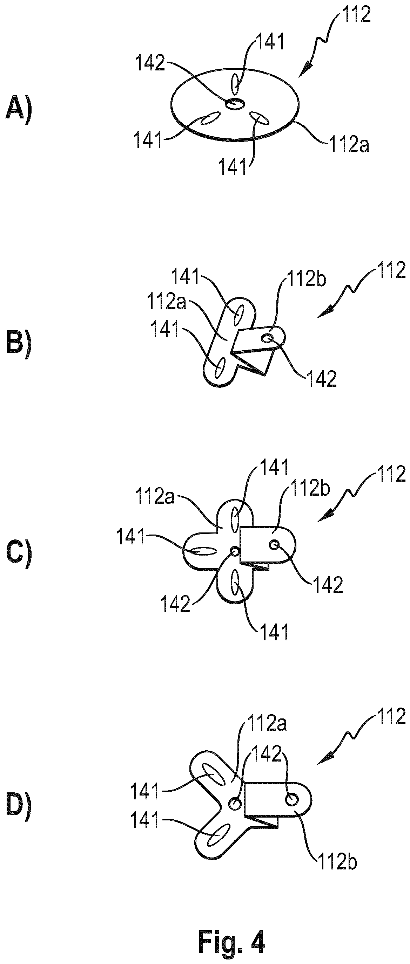

**Fig.** 4 zeigt mehrere Ausführungsformen eines Blechbauteils 112, das sich zur Kontaktierung des ersten Längsrands 106a des aus der ersten endständigen Stirnseite 104a austretenden Stromkollektors 106 einer erfindungsgemäßen Energiespeicherzelle 100 eignet.

Ausführungsform A zeigt als Blechbauteil 112 eine kreisrunde und im Wesentlichen flache Metallscheibe mit einem umlaufenden Rand 102a. Diese zeichnet sich durch ein zentrales Loch 142 und drei versetzt angeordnete Sicken 141 aus. Ein solches Bauteil kann in den Zellen gemäß den Figuren 1 bis 3jeweils zur elektrischen Kontaktierung der Randes 106a des Anodenstromkollektors 106 eingesetzt werden. Es eignet sich aber auch zur Verwendung als Blechbauteil 134 in der Zelle gemäß Fig. 3. Bei Verwendung einer solchen Metallscheibe zur Kontaktierung des Längsrandes 106a ist in aller Regel der in den Figuren 1 bis 3 dargestellte separate Leiter 133 zwingend erforderlich um die Distanz zum Deckelbauteil 102 zu überbrücken.

Anders bei Ausführungsform B. Hier umfasst das Blechbauteil 112 einen ersten Abschnitt 112a, der flach auf dem ersten Längsrand des aus der ersten endständigen Stirnseite 104a austretenden Stromkollektors aufsitzen kann und der sich dann parallel zur Stirnseite 104a erstreckt. Daneben umfasst es aber zusätzlich einen zweiten Abschnitt 112b, der sich abgewinkelt an den ersten Abschnitt 112a anschließt und über den der erste Abschnitt 112a elektrisch mit dem Deckelbauteil 102 verbunden ist. Bei Verwendung eines solchen Blechbauteils ist kein separater Leiter 133 erforderlich. Das Blechbauteil zeichnet sich weiterhin durch ein Loch 142 und zwei Sicken 141 aus. In diesen Sicken erfolgt bevorzugt die Verschweißung des Blechbauteils mit dem Längsrand des jeweiligen Stromkollektors.

Die Ausführungsformen C und D unterscheiden sich von Ausführungsform B darin, dass der Abschnitt 112a drei bzw. vier Streifen umfasst, die sich in unterschiedliche Richtungen erstrecken. Jeder der Streifen verfügt über eine Sicke 141. Daneben weisen die Blechteile jeweils zwei Löcher 142 auf.

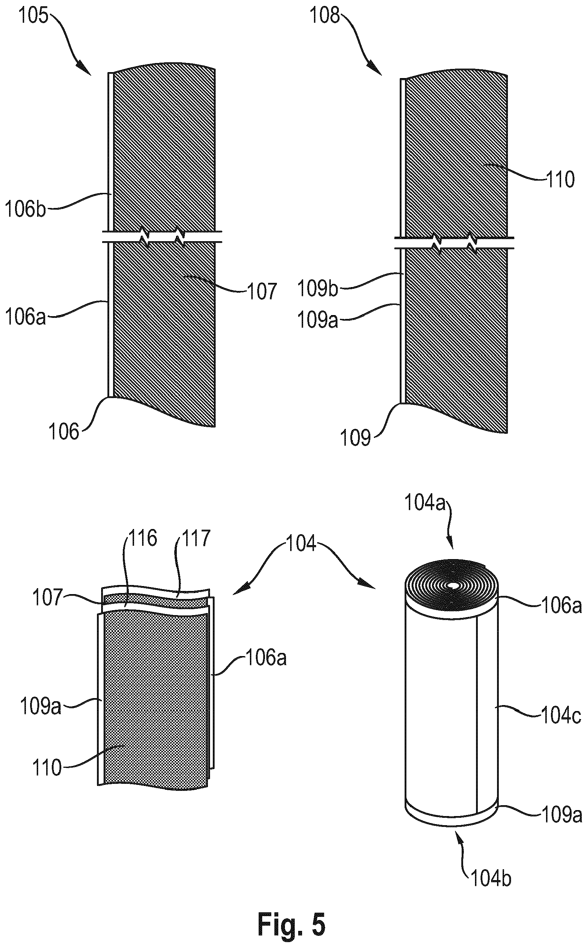

Der Aufbau des Elektroden-Separator-Verbunds 104 wird anhand von **Fig.** 5 veranschaulicht. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 116 und 117 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

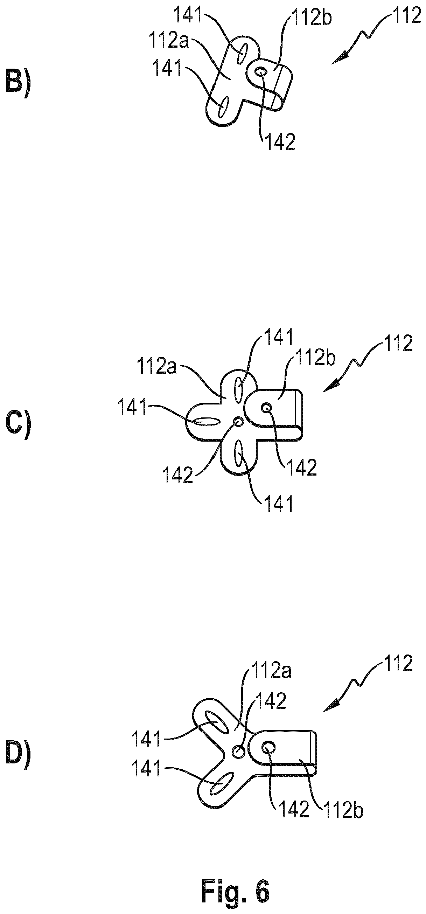

**Fig.** 6 zeigt weitere Ausführungsformen des Blechbauteils 112, das sich zur Kontaktierung des ersten Längsrands 106a des aus der ersten endständigen Stirnseite 104a austretenden Stromkollektors 106 einer erfindungsgemäßen Energiespeicherzelle 100 eignet.

Von den in den Ausführungsformen B-D der Fig. 4 dargestellten Blechbauteilen unterscheiden sich die hier dargestellten Ausführungsformen B-D im Wesentlichen nur darin, dass der Abschnitt 112b nicht in einer Z-Form gefaltet sondern U-förmig umgebogen ist. Solche Blechbauteile können in den Zellen gemäß den Figuren 1 bis 3 das Blechbauteil 112 und den elektrischen Leiter 133 ersetzen.

## Patentansprüche

1. Energiespeicherzelle (100) mit den folgenden Merkmalen:
a. Die Zelle umfasst einen Elektroden-Separator-Verbund (104) mit der Sequenz Anode (105) / Separator (116)/ Kathode (108).
b. Die Anode (105) des Elektroden-Separator-Verbunds (104) ist bandförmig ausgebildet und umfasst einen bandförmigen Anodenstromkollektor (106), der einen ersten Längsrand (106a) und einen dazu parallelen zweiten Längsrand aufweist.
c. Der bandförmige Anodenstromkollektor (106) umfasst einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist.
d. Die Kathode (108) des Elektroden-Separator-Verbunds (104) ist bandförmig ausgebildet und umfasst einen bandförmigen Kathodenstromkollektor (109), der einen ersten Längsrand (109a) und einen dazu parallelen zweiten Längsrand aufweist.
e. Der bandförmige Kathodenstromkollektor (109) umfasst einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist.
f. Der Elektroden-Separator-Verbund (104) liegt in Form eines zylindrischen Wickels mit einer ersten endständigen, von einer umlaufenden Kante begrenzten Stirnseite (104a) und einer zweiten endständigen, von einer umlaufenden Kante begrenzten Stirnseite (104b) und einem dazwischen liegenden Wickelmantel (104c) vor und umfasst die Anode (105) und die Kathode (108) in spiralförmig aufgewickelter Form.
g. Die Anode (105) und die Kathode (108) sind innerhalb des Elektroden-Separator-Verbunds (104) derart angeordnet, dass der erste Längsrand (106a) des Anodenstromkollektors (106) aus einer der endständigen Stirnseiten (104a, 104b) und der erste Längsrand (109a) des Kathodenstromkollektors (109) aus der anderen endständigen Stirnseite (104a, 104b) des Elektroden-Separator-Verbunds (104) austritt.
h. Die Zelle umfasst ein luft- und flüssigkeitsdicht verschlossenes Gehäuse, das einen metallischen Gehäusebecher (101) mit einem Boden (101a) und einer endständigen kreisförmigen Öffnung sowie ein Deckelbauteil (102) mit einem kreisförmigen Rand (102a), welche die endständige kreisförmige Öffnung verschließt, aufweist.
i. In dem Gehäusebecher ist der Elektroden-Separator-Verbund (104) in axialer Ausrichtung angeordnet, wobei die erste Stirnseite (104a) in Richtung des Deckelbauteils und die zweite Stirnseite (104b) in Richtung des Bodens (101a) weist, gegebenenfalls unmittelbar mit dem Boden (101a) in Kontakt steht.
j. Die Zelle umfasst eine ringförmige Dichtung (103) aus einem elektrisch isolierenden Material, die den kreisförmigen Rand (102a) des Deckelbauteils (102) umschließt und den Gehäusebecher (101) und das Deckelbauteil (102) elektrisch voneinander isoliert.
k. Der Gehäusebecher (101) umfasst eine Innenseite (101d) und eine Außenseite (101e) und in axialer Abfolge den Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite (101d) des Gehäusebechers (101) in Kontakt steht, und
- in dem Verschlussabschnitt (101c) die ringförmige Dichtung (103) in einem Presskontakt mit dem Deckelbauteil (102) und der Innenseite des Gehäusebechers (101) steht.
l. Der Zentralabschnitt (101b) und der Verschlussabschnitt (101c) sind durch eine Einbuchtung (111), welche die Außenseite (101e) des Gehäusebechers (101) ringförmig umläuft, getrennt.
m. Die Zelle umfasst ein Blechbauteil (112), gegebenenfalls einschließlich eines an dem Blechteil fixierten separaten elektrischen Leiters (133), das mit dem ersten Längsrand des aus der ersten endständigen Stirnseite (104a) austretenden Stromkollektors durch Verschweißung verbunden ist und über das dieser Stromkollektor elektrisch mit dem Deckelbauteil (102) verbunden ist.
n. Die Zelle umfasst mindestens ein Isolierelement (150; 160; 170; 180) aus einem elektrisch isolierenden Material, das das Blechbauteil (112) und/oder den ersten Längsrand (106a, 109a) des aus der ersten endständigen Stirnseite (104a) austretenden Stromkollektors (106, 109) und/oder den an dem Blechteil fixierten separaten elektrischen Leiter (133) vor einem unmittelbaren Kontakt mit der Innenseite (101d) des Gehäusebechers (101) schützt, insbesondere im Bereich der Einbuchtung (111).

2. Energiespeicherzelle nach Anspruch 1 mit mindestens einem der folgenden zusätzlichen Merkmale:
a. Das mindestens eine Isolierelement ist oder umfasst ein Isolierband (150), das auf die Kante, welche die Stirnseite (104a) begrenzt, aufgebracht ist und diese vor einem unmittelbaren Kontakt mit der Innenseite (101d) schützt.
b. Das mindestens eine Isolierelement ist oder umfasst ringförmiges Formteil aus Kunststoff (150) mit bevorzugt L-förmigem Querschnitt, das auf die Kante, welche die Stirnseite (104a) begrenzt, aufgebracht ist und diese vor einem unmittelbaren Kontakt mit der Innenseite (101d) schützt.
c. Das Isolierband oder das ringförmige Formteil aus Kunststoff weist eine Dicke im Bereich von 10 µm bis 200 µm auf.

3. Energiespeicherzelle nach Anspruch 1 mit mindestens einem der folgenden zusätzlichen Merkmale:
a. Das mindestens eine Isolierelement ist oder umfasst ein ringförmiges Isolierelement (160) aus Kunststoff, das an der Innenseite (101d) des Gehäusebechers (101) im Bereich der Einbuchtung (111) anliegt und diese vor einem unmittelbaren Kontakt mit dem Blechbauteil (112) schützt.
b. Das ringförmige Isolierelement (160) ist ein Teilabschnitt der ringförmigen Dichtung (103).
c. Das ringförmige Isolierelement (160) aus Kunststoff weist eine Dicke im Bereich von 50 µm bis 500 µm auf.

4. Energiespeicherzelle nach Anspruch 1 mit mindestens einem der folgenden zusätzlichen Merkmale:
a. Das mindestens eine Isolierelement ist oder umfasst ein ringförmiges Kunststoffteil (170), das das Blechbauteil (112) umschließt und dieses vor einem unmittelbaren Kontakt mit der Innenseite (101d) des Gehäusebechers (101) im Bereich der Einbuchtung (111) schützt.
b. Das ringförmige Kunststoffteil (170) ist hohlzylindrisch ausgebildet, umfasst einen Mantel (171) und wird stirnseitig durch je einen umlaufenden Rand begrenzt.
c. Das ringförmige Kunststoffteil (170) ist hohlzylindrisch ausgebildet, umfasst einen Mantel (171) und wird stirnseitig durch je einen umlaufenden Rand begrenzt, wobei einer der Ränder auf als nach außen gerichteter ringförmiger Kragen (171) ausgebildet ist und auf dem Blechbauteil (112) aufsitzt.
d. Das ringförmige Kunststoffteil (170) weist eine Dicke im Bereich von 20 µm bis 600 µm auf.

5. Energiespeicherzelle nach Anspruch 1 mit mindestens einem der folgenden zusätzlichen Merkmale:
a. Das mindestens eine Isolierelement ist oder umfasst eine elektrisch isolierende Kunststoffbeschichtung (180), die einen Rand des Blechbauteils (112) umschließt und diesen vor einem unmittelbaren Kontakt mit der Innenseite (101d) des Gehäusebechers (101), insbesondere im Bereich der Einbuchtung (111), schützt.
b. Die elektrisch isolierende Beschichtung (180) ist durch Umspritzen des Randes des Blechbauteils (112) gebildet.

6. Energiespeicherzelle nach Anspruch 1 mit mindestens einem der folgenden zusätzlichen Merkmale:
a. Das mindestens eine Isolierelement umfasst ein Isolierband (150) oder ringförmiges Formteil aus Kunststoff (150), das auf die Kante, welche die Stirnseite (104a) begrenzt, aufgebracht ist und diese vor einem unmittelbaren Kontakt mit der Innenseite (101d) schützt.
b. Das mindestens eine Isolierelement umfasst ein ringförmiges Isolierelement (160), das an der Innenseite (101d) des Gehäusebechers (101) im Bereich der Einbuchtung (111) anliegt und diese vor einem unmittelbaren Kontakt mit dem Blechbauteil (112) schützt.
c. Das mindestens eine Isolierelement umfasst ein ringförmiges Kunststoffteil (170), das das Blechbauteil (112) umschließt und dieses vor einem unmittelbaren Kontakt mit der Innenseite (101d) des Gehäusebechers (101) im Bereich der Einbuchtung (111) schützt.
d. Das mindestens eine Isolierelement ist oder umfasst eine elektrisch isolierende Kunststoffbeschichtung (180), die einen Rand des Blechbauteils (112) umschließt und diesen vor einem unmittelbaren Kontakt mit der Innenseite (101d) des Gehäusebechers (101), insbesondere im Bereich der Einbuchtung (111), schützt.

7. Energiespeicherzelle nach einem der vorhergehenden Ansprüche mit mindestens einem der folgenden zusätzlichen Merkmale:
a. Der Gehäusebecher (101) weist in dem Zentralabschnitt (101b) und dem Verschlussabschnitt (101c) einen identischen maximalen Außendurchmesser auf.
b. Im Bereich der Einbuchtung (111) ist der Außendurchmesser des Gehäusebechers (101) um das 4- bis 12-fache der Wandstärke des Gehäusebechers (101) in diesem Bereich reduziert.

8. Energiespeicherzelle nach einem der vorhergehenden Ansprüche mit mindestens einem der folgenden zusätzlichen Merkmale:
a. Das Blechbauteil (112) ist unmittelbar mit dem Deckelbauteil (102) verbunden.
b. Das Blechbauteil (112) umfasst einen ersten Abschnitt (112a), der flach auf dem ersten Längsrand des aus der ersten endständigen Stirnseite (104a) austretenden Stromkollektors aufsitzt und sich parallel zur Stirnseite (104a) erstreckt.
c. Das Blechbauteil (112) umfasst einen zweiten Abschnitt (112b), der sich abgewinkelt an den ersten Abschnitt anschließt und über den der erste Abschnitt elektrisch mit dem Deckelbauteil (102) verbunden ist.

9. Energiespeicherzelle nach einem der Ansprüche 1 bis 7 mit mindestens einem der folgenden zusätzlichen Merkmale:
a. Das Blechbauteil (112) ist über den separaten elektrischen Leiter (133) mit dem Deckelbauteil (102) verbunden.
b. Das Blechbauteil (112) sitzt flach auf dem ersten Längsrand des aus der ersten endständigen Stirnseite (104a) austretenden Stromkollektors auf.

10. Energiespeicherzelle nach einem der vorhergehenden Ansprüche mit einem der folgenden zusätzlichen Merkmale:
a. Der erste Längsrand des aus der zweiten endständigen Stirnseite (104b) austretenden Stromkollektors sitzt unmittelbar auf dem Boden (101a) des Gehäusebechers (101) auf und ist mit diesem durch Verschweißung verbunden.
b. Die Zelle umfasst ein Blechbauteil (134), das mit dem ersten Längsrand des aus der zweiten endständigen Stirnseite (104b) austretenden Stromkollektors durch Verschweißung verbunden ist und über das dieser Stromkollektor elektrisch mit dem Boden (101a) des Gehäusebechers (101) verbunden ist.

11. Energiespeicherzelle nach einem der vorhergehenden Ansprüche mit dem folgenden zusätzlichen Merkmal:
a. Der aus der ersten endständigen Stirnseite (104a) austretende Stromkollektor ist der Anodenstromkollektor (106) und der aus der zweiten Stirnseite (104b) austretende Stromkollektor ist der Kathodenstromkollektor (109).

12. Energiespeicherzelle nach einem der vorhergehenden Ansprüche mit einem der folgenden zusätzlichen Merkmale:
a. Der Gehäusebecher besteht aus Aluminium oder aus einer Aluminiumlegierung.
b. Ein endständiger, nicht mit Elektrodenmaterial beschichteter Abschnitt einer aus Aluminium oder einer Aluminiumlegierung bestehenden Stromkollektorfolie bildet die äußere Windung des Wickels und liegt gleichzeitig unmittelbar an dem Gehäusebecher aus dem Aluminium oder der Aluminiumlegierung an.

13. Energiespeicherzelle nach einem der vorhergehenden Ansprüche mit einem der folgenden zusätzlichen Merkmale:
a. Der Gehäusebecher besteht aus Kupfer oder Nickel oder einer Kupfer- oder Nickellegierung.
b. Ein endständiger, nicht mit Elektrodenmaterial beschichteter Abschnitt einer aus Kupfer oder Nickel oder einer Kupfer- oder Nickellegierung bestehenden Stromkollektorfolie bildet die äußere Windung des Wickels und liegt gleichzeitig unmittelbar an dem Gehäusebecher aus dem Kupfer oder dem Nickel oder der Kupfer- oder Nickellegierung an.
